## Europäisches Patentamt

## European Patent Office

## Office européen des brevets

(19)

(11) Veröffentlichungsnummer: **0 223 315**
**B1**

(12) # EUROPÄISCHE PATENTSCHRIFT

(45) Veröffentlichungstag der Patentschrift:
28.02.90

(51) Int. Cl.⁴: **H02M 3/156**

(21) Anmeldenummer: **86202050.0**

(22) Anmeldetag: **20.11.86**

(54) Schaltungsanordnung zur Erzeugung einer Gleichspannung aus einer sinusförmigen Eingangsspannung.

(30) Priorität: **22.11.85 DE 3541308**

(43) Veröffentlichungstag der Anmeldung:
**27.05.87 Patentblatt 87/22**

(45) Bekanntmachung des Hinweises auf die Patenterteilung:
**28.02.90 Patentblatt 90/9**

(84) Benannte Vertragsstaaten:
**DE FR GB**

(56) Entgegenhaltungen:
**DE-A- 2 652 275**
**GB-A- 2 147 159**
**US-A- 4 190 882**

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **FR GB**

(72) Erfinder: **Albach, Manfred, Dr., Hasbach 5,
D-5100 Aachen(DE)**

(74) Vertreter: **Hartmann, Heinrich, Dipl.-Ing. et al, Philips
Patentverwaltung GmbH
Wendenstrasse 35 Postfach 10 51 49,
D-2000 Hamburg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Schaltungsanordnung zur Erzeugung einer Gleichspannung aus einer im wesentlichen sinusförmigen Eingangsspannung, mit einem Filter zur Unterdrückung hochfrequenter Störsignale, mit einem eine Diode, eine Spule, einen Kondensator und einen Transistor umfassenden Schaltnetzteil, das über einen Gleichrichter mit dem Filter gekoppelt ist und dessen Elemente so angeordnet sind, daß im leitenden Zustand des Transistors die Diode gesperrt ist und der Spulenstrom zumindest über den Transistor fließt und im gesperrten Zustand über die Diode und eine Parallelschaltung aus einer Last und dem Kondensator, sowie mit einem Impulsgenerator, der aus der Eingangsspannung Schaltimpulse für den Transistor erzeugt, deren Frequenz sich zeitlich monoton zwischen einer minimalen Frequenz beim Maximalwert der gleichgerichteten Eingangsspannung und einer maximalen Frequenz beim Minimalwert ändert.

Eine solche Schaltungsanordnung ist aus der deutschen Offenlegungsschrift 26 52 275 bekannt und kann z.B. als elektrisches Vorschaltgerät für Gasentladungslampen eingesetzt werden. Das Filter ist an ein Wechselspannungsnetz angeschlossen und entnimmt diesem einen praktisch sinusförmigen Strom. Der Transistor wird dabei so gesteuert, daß die Einschaltdauer konstant ist, d.h. der Transistor wird dann wieder eingeschaltet, wenn der Spulenstrom den Wert Null erreicht. Die zeitliche Änderung der Frequenz der den Transistor steuernden Impulse verläuft während einer Halbwelle der Eingangsspannung parabelförmig. Der Maximalwert der Frequenz wird dabei bei dem Minimalwert der Eingangsspannung und der Minimalwert der Frequenz bei dem Maximalwert der Eingangsspannung erreicht.

Bedingt durch die Schlatvorgänge im Schaltnetzteil sind der Wechselspannung Störspannungen überlagert. Diese Störspannungen treten oberhalb der minimalen Frequenz der Impulse auf und machen sich insbesondere im niedrigen Frequenzbereich störend bemerkbar. Auf bestimmte tolerierbare Werte werden solche Störungen durch das zwischen dem Eingang der Schaltungsanordnung und dem Gleichrichter geschaltete Filter reduziert. Üblicherweise ist ein solches Filter aus einer Spule und einem Kondensator aufgebaut.

In der VDE-Norm 0871 sind zulässige Werte für solche Störspannungen festgelegt. Bei der Dimensionierung des Filters sind die in der VDE-Norm 0871 vorgeschriebenen maximalen Störspannungen einzuhalten. Es hat sich gezeigt, daß insbesondere die Störspannungen bei niedrigen Frequenzen die Größe der Spule des Filters bestimmen.

Aus der GB-A 2 147 159 ist ein Energieumsetzer zum Betreiben von Gasentladungslampen bekannt. Der Umsetzer wird aus einem Wechselstromnetz über einen Brückengleichrichter gespeist. An diesen ist die Reihenschaltung einer Induktivität und eines Schalttransistors angeschlossen, der durch die Reihenschaltung einer Diode mit der Parallelschaltung eines Kondensators mit der Last überbrückt ist. Der Brückengleichrichter liefert eine sinusförmig pulsierende Gleichspannung an die Reihenschaltung aus der Induktivität und dem Transistor. Ferner ist eine Schaltsteuerung vorgesehen, die den Transistor mit einer Frequenz, die höher ist als die Netzfrequenz, periodisch in den leitenden und in den gesperrten Zustand schaltet. Dabei wird entweder die Zeitdauer, während der sich der Transistor im leitenden Zustand befindet, während der Zeitabschnitte geringer gleichgerichteter Spannung größer gewählt als während der Maxima der gleichgerichteten Spannung, oder die Impulsdauer der Zeitabschnitte, in denen der Transistor leitet, wird konstant gehalten und nur die Impulsfrequenz wird variiert, so daß die Anzahl der Impulse bei geringer gleichgerichteter Spannung groß und während der Maxima der gleichgerichteten Spannung klein sind.

Der Erfindung liegt die Augabe zugrunde, die Störspannungen bei niedrigen Frequenzen zu verringern.

Die Augabe wird erfindungsgemäß dadurch gelöst, daß der Impulsgenerator einen Spannungs-Frequenz-Umsetzer enthält, der aus der Eingangsspannung den Beginn der Schaltimpulse bestimmende Startimpulse liefert, deren Frequenz sich zwischen den Extremwerten so ändert, daß die zweite Ableitung der Frequenz nach der Zeit stets Null oder negativ ist, daß der Impulsgenerator eine erste Vergleichsschaltung und einen ersten Integrator enthält, der ein dem integrierten Ausgangsstrom des Gleichrichters proportionales Ausgangssignal erzeugt und dessen Zeitkonstante kleiner als der reziproke Wert der maximalen Frequenz ist, und daß die erste Vergleichsschaltung ein Signal zur Beendigung eines Impulses erzeugt, wenn das Ausgangssignal des ersten Integrators größer als ein der gleichgerichteten Eingangsspannung proportionales Signal ist.

In der erfindungsgemäßen Schaltungsanordnung wird die Frequenz der Impulse so variiert, daß zwischen der maximalen und minimalen Frequenz der zeitliche Verlauf der Frequenz entweder linear oder konkav ist. Die Frequenz ändert sich also zwischen den Extremwerten so, daß die zweite Ableitung der Frequenz nach der Zeit stets Null oder negativ ist. D.h., für die Frequenz f gilt für $0 \leq wt \leq \pi/2$:

$$f \geq fmax - (fmax - fmin) * 2wt/\pi \ (I)$$

und für $\pi/2 \leq wt \leq \pi$:

$$f \geq fmin + (fmax - fmin) * 2(wt - \pi/2)/\pi , (2)$$

wobei fmin die minimale Frequenz, fmax die maximale Frequenz, w die Kreisfrequenz und t die Zeit ist. Da in dieser Schaltungsanordnung im Bereich der minimalen Frequenz sich der zeitliche Verlauf der Frequenz schneller ändert als bei der bekannten Schaltungsanordnung, werden die Störspannungen insbesondere im niedrigen Frequenzbereich vermindert. Daduch nimmt die Größe der Spule des Filters einen kleineren Wert an, d.h. die Induktivität der Spule wird geringer. Eine im Mittel sinusförmige Stromaufnahme aus dem Netz wird erreicht, indem der Transistor dann ausgeschaltet oder der Impuls dann beendet wird, wenn das dem integrierten Ausgangsstrom des Gleichrichters proportionale Signal größer als das der gleichgerichteten Eingangsspannung proportionale Signal ist.

Es sei noch erwähnt, daß aus der US-Patentschrift 4 190 882 ein Schaltnetzteil bekannt ist, das eine Hochfrequenzeinrichtung, z.B. einen Radarsender, mit einer Gleichspannung versorgt und das von einem Impulsgenerator gesteuert wird. Die Frequenz der Impulse variiert zeitlich linear zwischen 9 kHz und 11 kHz. Diese Frequenzänderung ist jedoch unabhängig von der Eingangsspannung des Schaltnetzteiles. Außerdem soll diese Schaltungsanordnung Störungen im zu sendenden Signal veringern, die durch die Schaltvorgänge im Schlaltnetzteil bewirkt werden.

Ergänzend wird auf die europäische Anmeldung 86 202 051 (Veröffentlichungsnummer 0 223 316) hingewiesen, die denselben Zeitrang wie die vorliegende Erfindung aufweist.

In einer Weiterbildung der Erfindung ist vorgesehen, daß der Spannungs-Frequenz-Umsetzer eine eine Referenzspannung mit einer der gleichgerichteten Eingangsspannung proportionalen Spannung vergleichende zweite Vergleichsschaltung, ein von der Vergleichsschaltung bei größerer Referenzspannung aktiviertes monostabiles Kippglied, das Augangssignal des monostabilen Kippgliedes integrierenden zweiten Integrator, dessen Zeitkonstante größer als der reziproke Wert der Frequenz der Eingangsspannung ist, und einen vom zweiten Integrator gesteuerten die Startimpulse erzeugenden spannungsgesteuerten Oszillator enthält. Bei dieser Weiterbildung ändert sich die Frequenz zeitlich linear zwischen dem Maximal- und Minimalwert. In der Formel (1) und (2) gilt in diesem Fall das Gleichheitszeichen. Als Filter wird dabei eine Kombination aus einer Spule und einem Kondensator verwendet. Für mehrstufige Filter, d.h. eine Kettenschaltung aus einfachen Filtern, die eine Spule und einen Kondensator enthalten, ist ein zeitlich konkaver Frequenzverlauf erforderlich. In diesem Fall gilt in der Formel (1) und (2) nicht das Gleichheitszeichen.

Die Erzeugung der Schaltimpulse im Impulsgenerator kann ein Kippglied übernehmen, das die Startimpulse und das Signal der ersten Vergleichsschaltung erhält.

Als Schaltnetzteil können in dieser Schaltungsanordnung drei verschiedene Ausführungsformen verwendet werden. Eine erste Ausführungsform, ein Aufwärtsspannungswandler, ist so aufgebaut, daß die Spule einerseits mit dem Gleichrichter und andererseits mit dem Transistor und über die Diode mit der Parallelschaltung aus Last und Kondensator verbunden ist. Beim Aufwärtsspannungswandler ist die Ausgangsspannung immer größer als die Eingangsspannung. In der zweiten Ausführungsform, dem Abwärtsspannungswandler, ist die Ausgangsspannung kleiner als die Eingangsspannung. Bei diesem Schaltnetzteil ist der Transistor einerseits mit dem Gleichrichter und andererseits mit der Diode und über die Spule mit der Parallelschaltung aus Last und Kondensator verbunden. Bei der dritten Ausführungsform, dem Aufwärts/Abwärtsspannungswandler ist der Transistor einerseits mit dem Gleichrichter und andererseits mit der Spule und über die Diode mit der Parallelschaltung aus Kondensator und Last verbunden. Bei dieser Schaltung kann die Ausgangsspannung größer oder auch kleiner als die Eingangsspannung sein.

Anhand der Zeichnungen wird im folgenden die Erfindung näher erläutert. Es zeigen:

Fig. I ein erstes Ausführungsbeispiel der Erfindung,
Fig. 2 Diagramme zur Erläuterung der Fig. I und
Fig. 3 und 4 zwei weitere Schaltnetzteile.

In Fig. I wird einem Filter I, das eine Spule 2 und einen Kondensator 3 enthält, eine sinusförmige Eingangsspannung mit einem Effektivwert von z.B. 220 V und einer Frequenz von 50 Hz zugeführt. Die Spule 2 ist einerseits mit einem Eingangsanschluß und andererseits mit dem Kondensator 3 verbunden, der parallel zum Ausgang des Filters I liegt.

Der Ausgang des Filters I ist mit einer aus vier Dioden bestehenden Gleichrichterbrücke 4 verbunden, deren Ausgang an einen Aufwärtsspannungswandler 5 (Schaltnetzteil) und einen zur Steuerung des Aufwärtsspannungswandler 5 dienenden Impulsgenerator 6 angeschlossen ist. Der Aufwärtsspannungswandler 5 enthält eine Spule I0, die mit dem positiven Ausgangsanschluß 7 des Gleichrichters 4 verbunden ist. Des weiteren umfaßt der Aufwärtsspannungswandler 5 einen NPN-Transistor II, eine Diode I2 und einen Kondensator I3. Der Kollektor des Transistors II, die Anode der Diode I2 und der dem Gleichrichter 4 abgewandte Anschlußpunkt der Spule I0 sind miteinander verbunden. Zwischen der Kathode der Diode I2 und dem Emitter des Transistors II liegt der Kondensator I3, dem eine Last I4, z.B. eine Gasentladungslampe mit den erforderlichen Schaltungen parallel geschaltet ist. Der Basis des Transistors II werden Schaltimpulse von dem Impulsgenerator 6 zugeführt, durch die der Transistor II in den leitenden Zustand versetzt wird. Der Transistor II kann auch ein Feldeffekttransistor sein.

Der Impulsgenerator 6 enthält vier Widerstände 2I bis 24, einen Spannungs-Frequenz-Umsetzer 25, ein RS-Kippglied 26, eine Vergleichsschaltung 27 und einen Integrator 28. Der Widerstand 2I ist einerseits mit dem Ausgangsanschluß 7 des Gleichrichters 4 verbunden und andererseits mit dem an den Ausgangsanschluß 8 angeschlossenen Widerstand 22, mit dem über den Widerstand 24 ebenfalls an den Ausgangsanschluß 8 angeschlossenen Widerstand 23 und mit einem Eingang 30 des Spannungs-Frequenz-Umsetzers 25. Der Spannungs-Frequenz-Umsetzer 25 enthält eine Vergleichsschaltung 3I, ein monostabiles Kippglied 32, einen Integrator 33 und einen spannungsgesteuerten Oszillator 34. Die Vergleichsschaltung 3I kann z.B. ein Komparator sein, dessen invertierender Eingang auch der Eingang 30 des Spannungs-Frequenz-Umsetzers 25 ist. Dem nichtinvertierenden Eingang der Vergleichsschaltung 3I wird eine Referenzspannung Uref zugeführt. Das Ausgangssignal der Vergleichsschaltung 3I wird über das monostabile Kippglied 32 dem Integrator 33 zugeleitet, der z.B. einen Widerstand und einen Kondensator umfaßt und dessen Zeitkonstante größer sein muß als der reziproke Wert der Frequenz des sinusförmigen Eingangssignals. Der dem Integrator 33 nachgeschaltete spannungsgesteuerte Oszillator 34 erzeugt Impulse, die über einen Ausgang 35 des Spannungs-Frequenz-Umsetzers 25 dem Setz-Eingang des RS-Kippgliedes 26 zugeführt werden. Der Ausgang des Kippgliedes 26 ist mit der Basis des Transistors II gekoppelt.

Zwischen dem Ausgangsanschluß 8 des Gleichrichters 4 und dem Emitter des Transistors II liegt ein Meßwiderstand I6, dem eine Reihenschaltung aus einem Widerstand 40 und einem Kondensator 4I parallel geschaltet ist. Der Widerstand 40 und der Kondensator 4I sind Bestandteil des Integrators 28, dessen Zeitkonstante kleiner als der Kehrwert der maximalen Frequenz der Schaltimpulse des Transistors II sein muß. Die Spannung am Kondensator 4I wird einem Eingang der Vergleichsschaltung 27, die ebenfalls ein Komparator sein kann, zugeführt. Der andere, der invertierende Eingang der Vergleichsschaltung 27 ist mit dem Verbindungspunkt zwischen den Widerständen 23 und 24 verbunden. Dem Rücksetzeingang des Kippgliedes 26 wird das Ausgangssignal der Vergleichsschaltung 27 zugeleitet.

Wenn der Transistor II leitend ist, d.h. wenn der Basis des Transistors II ein Strom zugeführt wird, ist die Diode I2 gesperrt, und der Strom I durch die Spule I0 fließt über die Kollektor-Emitter-Strecke des Transistors II zum Ausgangsanschluß 8. Ist der Transistor II gesperrt, d.h. der Basis des Transistors II wird kein Strom zugeführt, ist die Diode I2 leitend, und der Strom I fließt zur Parallelschaltung aus Kondensator I3 und Last I4. Da die Frequenz, mit der der Transistor II geschaltet wird, größer als 20 kHz ist, kann vorausgesetzt werden, daß die Spannung zwischen den Ausgangsanschlüssen 7 und 8 des Gleichrichters 4 konstant ist, d.h. während der Transistor II leitend ist, wird der Strom I linear mit der Zeit größer, und während der Transistor II gesperrt ist, nimmt der Strom I zeitlich linear ab.

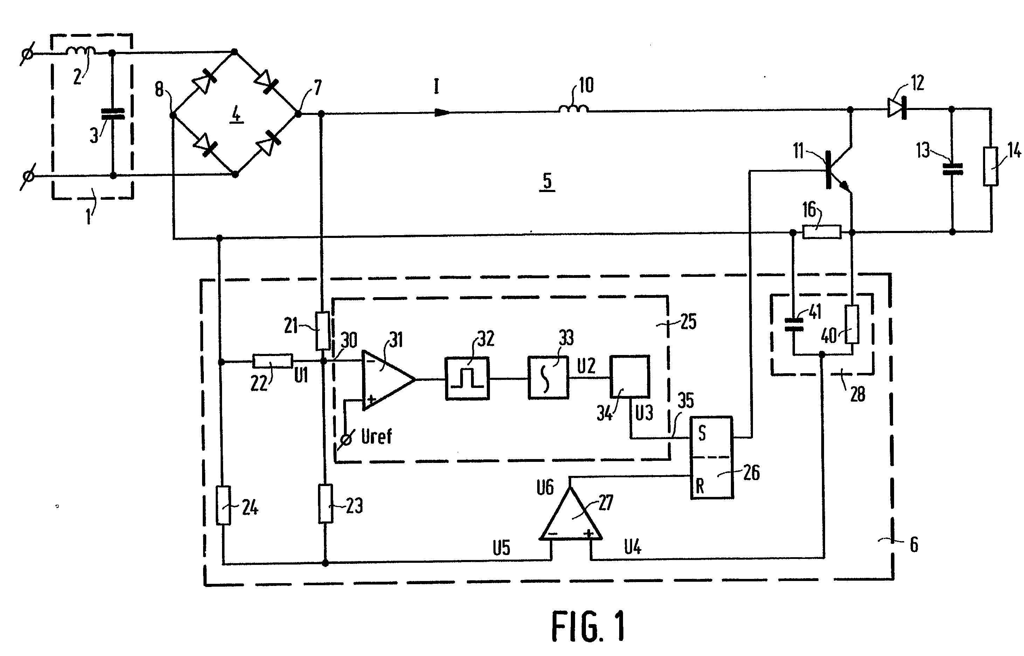

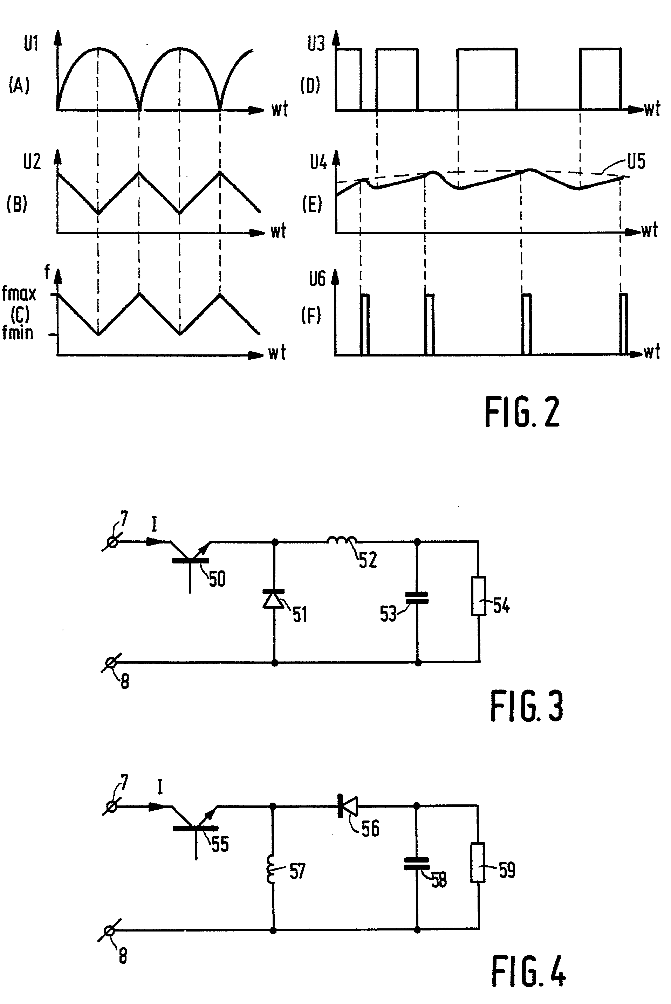

Aus der Spannung am Ausgang des Gleichrichters 4 erzeugt der Impulsgenerator Stromimpulse, die der Basis des Transistors II zugeführt werden und deren Frequenz vom Wert der gleichgerichteten Eingangsspannung abhängig ist. Anhand der Fig. 2 wird im folgenden die Erzeugung der Schaltimpulse durch den Impulsgenerator 6 erläutert. Am invertierenden Eingang der Vergleichsschaltung 3I, der auch der Eingang 30 des Spannungs-Frequenz-Umsetzers 25 ist, liegt eine Spannung UI, die proportional der Spannung an den Ausgangsanschlüssen 7 und 8 des Gleichrichters 4 ist und in Diagramm A der Fig. 2 dargestellt ist. Diese proportionale Spannung UI, die durch den Spannungsteiler, der aus den Widerständen 2I bis 24 gebildet ist, bestimmt wird, wird mit der Referenzspannung Uref am nichtinvertierenden Eingang der Vergleichsschaltung verglichen und wenn die Spannung am invertierenden Eingang kleiner als die Referenzspannung Uref wird, gibt die Vergleichsschaltung ein Signal zum Erzeugen eines Impulses in dem monostabilen Kippglied 32 ab, der nach einer vorbestimmten Zeit, der Haltezeit, beendet ist. Die von dem monostabilen Kippglied 32 erzeugten Impulse treten zweimal pro Periode der Eingangsspannung auf und werden im Integrator 33 integriert. Das dreieckförmige Ausgangssignal U2 des Integrators 33 ist in Diagramm B der Fig. 2 dargestellt. Diese Ausgangsspannung U2 ist das frequenzbestimmende Steuersignal für den spannungsgesteuerten Oszillator 34, dessen Ausgangssignal U3 die Startimpulse für das Kippglied 26 bilden. In Diagramm C ist der Verlauf der Frequenz, die proportional zur Spannung U2 ist, und in Diagramm D sind die rechteckförmigen Startimpulse dargestellt.

Beim minimalen Wert der der gleichgerichteten Ausgangsspannung des Gleichrichters 4 proportionalen Spannung UI hat die Spannung U2 und damit die Frequenz der Startimpulse einen maximalen Wert und beim maximalen Wert der Spannung UI hat die Spannung U2 und ebenso die Frequenz einen minimalen Wert. Zwischen den Extremwerten ändert sich die Frequenz zeitlich linear. Folglich gelten für die Frequenz f der Schaltimpulse die folgenden Formeln. Für $0 \le wt \le \pi/2$ gilt

$$f = fmax - (fmax - fmin) * 2wt/ \quad (3)$$

und für $\pi/2 \le wt \le \pi$

$$f = fmin + (fmax - fmin) * 2(wt - \pi/2) /\pi, \quad (4)$$

wobei fmax die maximale Frequenz, fmin die minimale Frequenz, w die Kreisfrequenz und t die Zeit ist.

Das monostabile Kippglied 32 sollte so eingestellt werden, daß bei der Frequenz von 50 Hz des sinusförmigen Eingangssignals der Haltezustand 5 ms andauert und daß es nach weiteren 5 ms wieder gesetzt werden kann. Der dem nichtinvertierenden Eingang der Vergleichsschaltung 3I zugeführte Referenzwert muß so gewählt werden, daß der maximale Frequenzwert möglichst bei den entsprechenden Nullwerten der Eingangsspannung erreicht wird. Durch die Zeitkonstante des Integrators 33 wird die maximale bzw. minimale Frequenz festgelegt.

Durch einen Impuls des Spannungs-Frequenz-Umsetzers 25 wird das Kippglied 26 gesetzt und erzeugt einen Stromimpuls, der den Transistor II in den leitenden Zustand versetzt. Der Ausgangsstrom I des Gleichrichters 4 erzeugt im Meßwiderstand eine dazu proportionale Spannung, die vom Integrator 28 integriert wird und dessen Ausgangssignal U4 auf den nichtinvertierenden Eingang der Vergleichsschaltung 27 gegeben wird. Am invertierenden Eingang der Vergleichsschaltung 27 liegt eine der Ausgangsspannung des Gleichrichters 4 proportionale Spannung U5 an, die durch die Widerstände 2I bis 24 bestimmt wird. Übeschreitet nun die Spannung U4, die näherungsweise dem Mittelwert des aufgenommenen Stromes innerhalb einer Schaltperiode entspricht, die Spannung U5, dann liefert die Vergleichsschaltung 27 ein Signal U6, mit dem das Kippglied 26 zurückgesetzt wird und damit ein Impuls des Kippgliedes 26 beendet wird, so daß der Transistor II in den gesperrten Zustand wechselt. Die Signale U4 und U5 sind in Diagramm E und das Signal U6 in Diagramm F der Fig. 2 dargestellt. Der Integrator 28 könnte auch mit Hilfe eines zusätzlichen Verstärkers und eines Transistors realisiert werden. Dieser Integrator kann durch den Transistor wieder auf den Anfangswert Null zurückgesetzt werden, indem der Transistor kurzzeitig durch das Signal U6 in den leitenden Zustand versetzt wird und den Kondensator kurzschließt.

Unter der Voraussetzung, daß die VDE-Norm 0871 erfüllt werden soll, ergibt sich für die Induktivität der Spule 2 des Filters I bei einer Induktivität von 5 mH der Spule I0 dann der minimale Wert, wenn die lineare zeitliche Variation der Frequenz der Schaltimpulse zwischen 30 und II5 kHz erfolgt. Hierbei nehmen insbesondere im niedrigen Frequenzbereich die Störspannungen ab.

Zwei weitere Schaltnetzteile, die in Fig. 3 und 4 dargestellt sind, können auch in der Schaltungsanordnung nach Fig. I verwendet werden. In Fig. 3 ist ein Abwärtsspannungswandler dargestellt, bei dem der Kollektor eines von dem Impulsgenerator 6 zu steuernden Transistors 50 an den Ausgangsanschluß 7 des Gleichrichters 4 angeschlossen ist und der Emitter an die Kathode einer Diode 5I und an eine Spule 52. Die Spule ist andererseits mit einer an den Anschlußpunkt 8 angeschlossenen Parallelschaltung aus einem Kondensator 53 und einer Last 54 verbunden. Ebenso ist die Anode der Diode 5I an den Anschlußpunkt 8 geschaltet.

In Fig. 4 ist ein Aufwärts/Abwärtsspannungswandler dargestellt, der ebenfalls einen Transistor 55 enthält, dessen Kollektor an den Anschlußpunkt 7 des Gleichrichters 4 angeschlossen ist, dessen Basis die Schaltimpulse des Impulsgenerators 6 zugeführt werden und dessen Emitter mit der Kathode einer Diode 56 und mit einem Anschlußpunkt einer Spule 57 verbunden ist. Die Anode der Diode 56 ist an eine mit dem Anschlußpunkt 8 verbundene Parallelschaltung aus einem Kondensator 58 und einer Last 59 geschaltet. Der andere Anschlußpunkt der Spule 57 ist auch an den Anschlußpunkt 8 des Gleichrichters 4 angeschlossen.

**Patentansprüche**

I. Schaltungsanordnung zur Erzeugung einer Gleichspannung aus einer im wesentlichen sinusförmigen Eingangsspannung, mit einem Filter (I) zur Unterdrückung hochfrequenter Störsignale, mit einem eine Diode (I2, 5I, 56), eine Spule (I0, 52, 57), einen Kondensator (I3, 53, 58) und einen Transistor (II, 50, 55) umfassenden Schaltnetzteil (5), das über einen Gleichrichter (4) mit dem Filter (I) gekoppelt ist und dessen Elemente so angeordnet sind, daß im leitenden Zustand des Transistors (II, 50, 55) die Diode (I2, 5I, 56) gesperrt ist und der Spulenstrom zumindest über den Transistor (II, 50, 55) fließt und im gesperrten Zustand über die Diode (I2, 5I, 56) und eine Parallelschaltung aus einer Last (I4, 54, 59) und dem Kondensator (I3, 53, 58), sowie mit einem Impulsgenerator (6), der aus der Eingangsspannung Schaltimpulse für den Transistor (II, 50, 55) erzeugt, deren Frequenz sich zeitlich monoton zwischen einer minimalen Frequenz beim Maximalwert der gleichgerichteten Eingangsspannung und einer maximalen Frequenz beim Minimalwert ändert, dadurch gekennzeichnet, daß der Impulsgenerator (6) einen Spannungs-Frequenz-Umsetzer (25) enthält, der aus der Eingangsspannung den Beginn der Schaltimpulse bestimmende Startimpulse liefert, deren Frequenz sich zwischen den Extremwerten so ändert, daß die zweite Ableitung der Frequenz nach der Zeit stets Null oder negativ ist, daß der Impulsgenerator (6) eine erste Vergleichsschaltung (27) und einen ersten Integrator (28) enthält, der ein dem integrierten Ausgangsstrom (I) des Gleichrichters (4) proportionales Ausgangssignal (U4) erzeugt und dessen Zeitkonstante kleiner als der reziproke Wert der maximalen Frequenz ist, und daß die erste Vergleichsschaltung (27) ein Signal (U6) zur Beendigung eines Impulses erzeugt, wenn das Ausgangssignal (U4) des ersten Integrators (28) größer als ein der gleichgerichteten Eingangsspannung proportionales Signal (U5) ist.

2. Schaltungsanordnung nach Anspruch I, dadurch gekennzeichnet, daß der Spannungs-Frequenz-Umsetzer (25) eine eine Referenzspannung (Uref) mit einer der gleichgerichteten Eingangsspannung proportionalen Spannung (UI) vergleichende zweite Vergleichsschaltung (3I), ein von der Vergleichsschaltung (3I) bei größerer Referenzspannung (Uref) aktiviertes monostabiles Kippglied (32), einen das Ausgangssignal des monostabilen Kippgliedes (32) integrierenden zweiten Integrator (33), dessen Zeitkonstante größer als der reziproke Wert der Frequenz der Eingangsspannung ist, und einen vom zweiten Integrator (33) gesteuerten die Startimpulse (U3) erzeugenden spannungsgesteuerten Oszillator (34) enthält.

3. Schaltungsanordnung nach einem der vorhergehenden Ansprüche, dadurch gekennzeichnet, daß der Impulsgenerator (6) ein die Schaltimpulse erzeugendes Kippglied (26) enthält, dem die Startimpulse (U3) und das Signal (U6) der ersten Vergleichsschaltung (27) zugeführt werden.

4. Schaltungsanordnung nach einem der vorhergehenden Ansprüche, dadurch gekennzeichnet, daß die Spule (I0) einerseits mit dem Gleichrichter (4) und andererseits mit dem Transistor (II) und über die Diode (I2) mit der Parallelschaltung aus Last (I4) und Kondensator (I3) verbunden ist.

5. Schaltungsanordnung nach einem der Ansprüche I bis 3, dadurch gekennzeichnet, daß der Transistor (50) einerseits mit dem Gleichrichter (4) und andererseits mit der Diode (5I) und über die Spule (52) mit der Parallelschaltung aus Last (54) und Kondensator (53) verbunden ist.

6. Schaltungsanordnung nach einem der Ansprüche I bis 3, dadurch gekennzeichnet, daß der Transistor (55) einerseits mit dem Gleichrichter (4) und andererseits mit der Spule (57) und über die Diode (56) mit der Parallelschaltung aus Kondensator (58) und Last (59) verbunden ist.

**Claims**

1. A cirruit arrangement for forming a direct voltage from an essentially sinusoidal input voltage comprising a filter (1) for suppressing high-frequency interference signals, a switched mode power supply part (5) which is composed of a diode (12, 51, 56) a coil (10, 52, 57), a capacitor (13, 53, 58) and a transistor (11, 50, 55) and is coupled to the filter (1) through a rectifier (4), while its elements are arranged so that in the conductive state of the transistor (11, 50, 55), the diode (12, 51, 56) is cut off and the coil current flows at least through the transistor (11, 50, 55) and in the cut-off state flows through the diode (12, 51, 56) and a parallel arrangement of a load (14, 54, 59) and the capacitor (13, 53, 58), and a pulse generator (6), which forms from the input voltage switching pulses for the transistor (11, 50, 55), whose frequency is varied uniformly in time between a minimum frequency at the maximum value of the rectified input voltage and a maximum frequency at the minimum value, characterized in that the pulse generator (6) comprises a voltage-to-frequency converter (25), which forms from the input voltage starting pulses, which determine the beginning of the switching pulses and whose frequency is varied between the extreme values in such a manner that the second derivative of the frequency with respect to time is always zero or negative, in that the pulse generator (6) comprises a first comparison circuit (27) and a first integrator (28), which produces an output signal (U4) proportional to the integrated output current (I) of the rectifier (4) and whose time constant is smaller than the rectifier value of the maximum frequency and in that the first comparison circuit (27) produces a signal (U6) for terminating a pulse when the output signal (U4) of the first integrator (28) is larger than the signal (U5) proportional to the rectified input voltage.

2. A circuit arrangement as claimed in Claim 1, characterized in that the voltage-to-frequency converter (25) comprises a second comparison circuit (31) comparing a reference voltage (3) with a voltage (U1) proportional to the rectified input voltage (Uref), a mono-stable trigger element (32) activated by the comparison circuit (31) at a larger reference voltage (Uref), a second integrator (33), which integrates the output signal of the monostable trigger element (32) and whose time constant is larger than the reciprocal value of the frequency of the input voltage, and a voltage-controlled oscillator (34) controlled by the second integrator (33) and producing the starting pulses (U3).

3. A circuit arrangement as claimed in any one of the preceding Claims, characterized in that the pulse generator (6) comprises a trigger element (26), which produces the switching pulses and to which the starting pulses (U3) and the signal (U6) of the first comparison circuit (27) are supplied.

4. A circuit arrangement as claimed in any one of the preceding Claims, characterized in that the coil (10) is connected on the one hand to the rectifier (4) and on the other hand to the transistor (11) and through the diode (12) to the parallel arrangement of the load (14) and the capacitor (13).

5. A circuit arrangement as claimed in any one of Claims 1 to 3, characterized in that the transistor (50) is connected on the one hand to the rectifier (4) and on the other hand to the diode (51) and through the coil (52) to the parallel arrangement of the load (53) and the capacitor.

6. A circuit arrangement as claimed in any one of Claims 1 to 3, characterized in that the transistor (55) is connected on the one hand to the rectifier (4) and on the other hand to the coil (57) and through the diode (56) to the parallel arrangement of the capacitor (58) and the load (59).

## Revendications

1. Montage de circuit pour la production d'une tension continue à partir d'une tension d'entrée essentiellement sinusoïdale, comportant un filtre (1) pour la suppression de signaux parasites de haute fréquence, un bloc d'alimentation à mode commuté (5) comprenant une diode (12, 51, 56), une bobine (10, 52, 57), un condensateur (13, 53, 58) et un transistor (11, 50, 55), qui est couplé au filtre (1) par l'intermédiaire d'un redresseur (4) et dont les éléments sont agencés d'une manière telle que, dans l'état conducteur du transistor (11, 50, 55), la diode (12, 51, 56) soit bloquée et le courant de bobine passe au moins par le transistor (11, 50, 55) et que, dans l'état bloqué, il passe par la diode (12, 51, 56) et par un montage en parallèle d'une charge (14, 54, 59) et du condensateur (13, 53, 58), ainsi qu'un générateur d'impulsions (6) qui, à partir de la tension d'entrée, produit des impulsions de commutation pour le transistor (11, 50, 55) dont la fréquence varie de manière monotone dans le temps entre une fréquence minimale pour une valeur maximale de la tension d'entrée redressée et une fréquence maximale pour une valeur minimale de cette tension, caractérisé en ce que le générateur d'impulsions (6) contient un convertisseur de tension-fréquence (25) qui, à partir de la tension d'entrée, fournit des impulsions de démarrage déterminant les impulsions de commutation, dont la fréquence varie entre les valeurs extrêmes d'une manière telle que la dérivée seconde de la fréquence en fonction du temps soit toujours nulle ou négative, que le générateur d'impulsions (6) contient un premier circuit comparateur (27) et un premier intégrateur (28) qui produit un signal de sortie (U4) proportionnel au courant de sortie intégré (I) du redresseur (4) et dont la constante de temps est inférieure à la valeur réciproque de la fréquence maximale, et que le premier circuit comparateur (27) produit un signal (U6) pour la terminaison d'une impulsion, lorsque le signal de sortie (U4) du premier intégrateur (28) est supérieur à un signal (U5) proportionnel à la tension d'entrée redressée.

2. Montage de circuit suivant la revendication 1, caractérisé en ce que le convertisseur de tension-fréquence (25) contient un second circuit comparateur (31) comparant une tension de référence (Uref) à une tension (U1) proportionnelle à la tension d'entrée redressée, une bascule monostable (32) activée par le circuit comparateur (31) dans le cas d'une tension de référence (Uref) supérieure, un second intégrateur (33) intégrant le signal de sortie de la bascule monostable (32), dont la constante de temps est supérieure à la valeur réciproque de la fréquence de la tension d'entrée, et un oscillateur (34) commandé en tension, produisant les impulsions de démarrage (U3) sous la commande du second intégrateur (33).

3. Montage de circuit suivant l'une quelconque des revendications précédentes, caractérisé en ce que le générateur d'impulsions (6) comprend une bascule (26) produisant les impulsions de commutation, à laquelle les impulsions de démarrage (U3) et le signal (U6) du premier circuit comparateur (27) sont appliqués.

4. Montage de circuit suivant l'une quelconque des revendications précédentes, caractérisé en ce que la bobine (10) est connectée, d'une part, au redresseur (4) et, d'autre part, au transistor (11) et, par l'intermédiaire de la diode (12), au montage en parallèle de la charge (14) et du condensateur (13).

5. Montage de circuit suivant l'une quelconque des revendications 1 à 3, caractérisé en ce que le transistor (50) est connecté, d'une part, au redresseur (4) et, d'autre part, à la diode (51) et, par l'intermédiaire de la bobine (52), au montage en parallèle de la charge (54) et du condensateur (53).

6. Montage de circuit suivant l'une quelconque des revendications 1 à 3, caractérisé en ce que le transistor (55) est connecté, d'une part, au redresseur (4) et, d'autre part, à la bobine (57) et, par l'intermédiaire de la diode (56), au montage en parallèle du condensateur (58) et de la charge (59).

FIG. 1

FIG. 2

FIG. 3

FIG. 4